# EUROPÄISCHE PATENTSCHRIFT

(11) **EP 2 451 598 B1**
(45) Veröffentlichungstag und Bekanntmachung des Hinweises auf die Patenterteilung: **04.09.2019**
(21) Anmeldenummer: 10747149.2
(22) Anmeldetag: 07.07.2010
(51) Int. Cl.: B22D 18/04, B22D 18/06, B22D 18/08, B22D 17/30, B62D 21/00

(54) **ANLAGE ZUM GIESSEN UNTER DRUCK**
DEVICE FOR CASTING UNDER PRESSURE
SYSTÈME DE COULÉE SOUS PRESSION

(30) Priorität: 07.07.2009 DE 102009032148; 06.07.2010 DE 102010026293
(43) Veröffentlichungstag der Anmeldung: 16.05.2012
(60) Teilanmeldung: 17198230.9
(73) Patentinhaber: KSM Castings Group GmbH, 31137 Hildesheim (DE); Fill Gesellschaft m.b.H., 4942 Gurten (AT)
(72) Erfinder: HEINECKE, Sven, 38899 Hasselfelde (DE); MÄRZ, Ingo, 38855 Wernigerode (DE); OPPELT, Holger, 06507 Bad Suderode (DE); GOLZ, Roland, 38855 Wernigerode (DE); LANDGRAF, Frank, 31162 Bad Salzdetfurth (DE); BOINDECKER, Alois, A-4942 Gurten (AT); RATHNER, Thomas, A-4910 Ried im Innkreis (AT); SCHNEEBERGER, Alexander, A-4910 Ried im Innkreis (AT); WIESINGER, Alois, A-4675 Weibern (AT)
(74) Vertreter: Patentanwälte Thömen & Körner
(86) Internationale Anmeldenummer: PCT/DE2010/000780
(87) Internationale Veröffentlichungsnummer: WO 2011/003396

(56) Entgegenhaltungen:
- EP-A1- 0 253 692
- EP-A1- 0 398 168
- EP-A1- 1 270 114
- EP-A1- 1 733 823
- DE-U1-202008 017 274
- GB-A- 1 471 882
- US-A- 4 825 772
- WUERKER L ET AL: "Radfuehrende Bauteile, hergestellt im CPC-Verfahren", GIESSEREI, GIESSEREI VERLAG, DUSSELDORF, DE, Bd. 92, Nr. 9, 1. Januar 2005 (2005-01-01) , Seiten 30-35, XP009139013, ISSN: 0016-9765

## Beschreibung

Die Erfindung betrifft eine Anlage zum Gießen nach dem Oberbegriff des Anspruchs 1.

Solche Anlagen mit einer Gießvorrichtung, insbesondere zum Gießen unter einem durch eine Gasphase erzeugten Druck, finden in der Gießereitechnik, insbesondere für die Herstellung von Gussstücken mit hohen physikalischen und mechanischen Kennwerten, insbesondere aus Leichtmetall-Legierungen, Anwendung.

Aus der DE 1178979 A ist ein Druckgießverfahren bekannt, bei dem unter der Einwirkung eines Druckunterschieds eine Schmelze aus einem in einer hermetisch abgedichteten Speisekammer befindlichen Ofen durch ein Gießrohr in den Hohlraum einer Gießform befördert wird, wobei die Gießform in einer anderen hermetisch abgedichteten Ausgleichskammer angeordnet ist. In der Ausgleichskammer erstarrt das Gussstück bei der dort vorliegenden Temperatur und bei dem dort vorliegenden Druck. Anschließend wird das fertige Gussstück aus der Gießform entnommen und ein neuer Gießzyklus kann durchgeführt werden.

Das dem Fachmann bekannte Gegendruck-Kokillengießverfahren, auch bekannt als CPC (Counter Pressure Casting)-Gießverfahren, ist eine Weiterentwicklung des so genannten Niederdruck-Gießverfahrens und aus diversen Druckschriften, beispielsweise der EP 0 221 196 B1, der EP 0 564 774 B1 oder der DE 34 22 121 A1 bekannt.

Im Gegensatz zum, dem Fachmann ebenfalls bekannten Niederdruck-Gießverfahren wird allerdings nicht nur der Gießofen, sondern auch die Kokille bzw. Gießform mit Druckgas beaufschlagt.

EP1 733 823 A1 offenbart eine Vorrichtung und ein Verfahren zum Niederdruck-Kokillengießen, wobei sich ein mit Schmelze gefüllter Ofen in einer unteren Kammer befindet. Darüber befindet sich eine aus zwei Kokillenhälften bestehende Gießform, wobei die untere Hälfte auf einer unteren Zwischenplatte und die obere Hälfte auf einer oberen Platte befestigt sind. Über ein Steigrohr wird beim Gießvorgang durch einen auf die Schmelze wirkenden Druck diese in die Kokille steigend eingebracht. Gemäß einer in den Fig. 1 - 3 der EP1 733 823 A1 dargestellten Ausführungsform ist die obere Formhälfte durch einen Mechanismus vertikal beweglich. Ein zusätzlicher Mechanismus verschwenkt die obere Formhälfte von einer horizontalen Position in eine vertikale Position, in welcher die Formhälfte gereinigt und geprüft wird.

Der eigentliche Gießvorgang erfolgt sowohl beim Niederdruck-Gießverfahren als auch beim Gegendruck-Kokillengießverfahren mit Hilfe eines Steigrohres, durch das die Schmelze nach oben in die Kokille gefördert wird.

Die Druckbeaufschlagung der Schmelze im Ofen zum Hochfördern der Schmelze in die Kokille wird jedoch beim Gegendruck-Kokillengießverfahren durch eine Druckdifferenz herbeigeführt, indem der Gasdruck in der Kokille etwas abgesenkt wird. Dadurch entsteht ein Überdruck im Gießofen, der für das Hochsteigen der Schmelze in die Kokille ausreicht.

Nachteilig an den bekannten Anlagen ist, dass einige Arbeitsgänge, die nicht unmittelbar mit dem eigentlichen Gießvorgang verbunden sind, sehr arbeitsintensiv sind. Zudem sind die Umrüstzeiten, insbesondere zum Wechseln der Gießform oder zum Neubeschicken eines Ofens mit Schmelze, relativ lang.

Der Erfindung liegt daher die Aufgabe zugrunde, eine Anlage, insbesondere eine Gegendruck-Kokillengießanlage oder insbesondere eine Niederdruck-Kokillengießanlage, zur Herstellung von Gussstücken durch Gießen unter Druck, insbesondere durch Gegendruck-Kokillengießen oder insbesondere durch Niederdruck-Kokillengießen bereitzustellen, bei denen der Automatisierungsgrad und die Regelungsqualität der Anlage und somit die Produktivität erhöht werden können. Zudem sollen die Umrüstzeiten verkürzt und arbeitsintensive Schritte erleichtert werden, um so eine Produktivitätssteigerung zu erreichen.

Dabei wird unter dem Begriff "Gießen unter Druck" das Gießen unter bzw. bei Überdruck, Normaldruck oder Unterdruck verstanden, wobei je nach Anwendungsfall ein oder mehrere dieser Gießverfahren vorteilhaft sein können. Unter diese Gießverfahren fallen beispielsweise auch das Kippgießverfahren, das Bodengießverfahren, das Seitengießverfahren oder das Kopfgießverfahren, wobei auch hier je nach Anwendungsfall ein oder mehrere dieser Gießverfahren vorteilhaft sein können.

Die vorgenannte Aufgabe wird bei einer Anlage nach dem Oberbegriff des Anspruchs 1 durch die kennzeichnenden Merkmale des Anspruchs 1 gelöst.

Die Erfindung betrifft eine Anlage zum Gießen unter Druck mit einer Dauergießform aus wenigstens zwei Gießformteilen, insbesondere aus zwei Gießformhälften, bei welcher erfindungsgemäß wenigstens ein Gießformteil nach dem Öffnen der Dauergießform in eine Position schwenkbar ist, in welcher die Innenfläche dieses Gießformteils, vorzugsweise durch eine Person, arbeitserleichternd und zeitsparend behandelbar ist.

Erfindungsgemäß ist ein im Boden versenktes oder auf dem Boden positioniertes Schienensystem vorgesehen,
auf dem wenigstens ein Schlitten zur vollautomatischen Aufnahme bzw. Entnahme und vollautomatischen Abgabe bzw. Überführung eines Ofens angeordnet ist, wobei der Schlitten zwischen einer Gießvorrichtung der Gegendruck- oder Niederdruck-Kokillengießanlage und einer entfernt davon liegenden Bereitstellungsposition pendelt, derart, dass der Schlitten einen Ofen an der Bereitstellungsposition aufnimmt und diesen in die, noch nicht mit einem Ofen versehene Gießvorrichtung überführt, oder dass der Schlitten einen Ofen aus der Gießvorrichtung entnimmt und diesen an eine freie Stelle der Bereitstellungsposition, insbesondere zur Neubeschickung mit Schmelze, abgibt,
und
der Schlitten zudem zur vollautomatischen Aufnahme bzw. Entnahme und vollautomatischen Abgabe bzw. Überführung einer Gießform oder Gießformhälfte vorgesehen ist, wobei der Schlitten zwischen der Gießvorrichtung und einer entfernt davon liegenden Bereitstellungsposition pendelt, derart, dass der Schlitten eine Gießform oder Gießformhälfte an der Bereitstellungsposition aufnimmt und diese in die, noch nicht mit einer Gießform oder Gießformhälfte versehene Gießvorrichtung überführt, oder dass der Schlitten eine Gießform oder Gießformhälfte aus der Gießvorrichtung entnimmt und diese an eine freie Stelle der Bereitstellungsposition zur weiteren Verwendung, insbesondere zur Zwischenlagerung oder zum Austausch, abgibt,
wobei der Schlitten wenigstens zwei Ebenen aufweist, wobei eine untere Ebene zur vollautomatischen Aufnahme bzw. Entnahme und vollautomatischen Abgabe bzw. Überführung des Ofens, und eine obere Ebene zur vollautomatischen Aufnahme bzw. Entnahme und vollautomatischen Abgabe bzw. Überführung der Gießform oder Gießformhälfte vorgesehen ist.

Die erfindungsgemäße Ausgestaltung führt zur Produktivitätssteigerung, insbesondere dadurch, dass der Automatisierungsgrad erhöht wird und Umrüstzeiten verkürzt werden.

Bei der erfindungsgemäßen Anlage zum Gießen unter Druck kann es sich vorteilhaft um eine Säulengießanlage handeln.

Für gewisse Anwendungsfälle kann es von Vorteil sein, wenn die Anlage zum Gießen unter Druck eine Gegendruck-Kokillengießanlage ist.

Für andere Anwendungsfälle kann es von Vorteil sein, wenn die Anlage zum Gießen unter Druck eine Niederdruck-Kokillengießanlage.

Für einige Anwendungsfälle kann es von Vorteil sein, wenn die Anlage zum Gießen unter Druck eine Schwerkraft-Kokillengießanlage ist.

Für wieder andere Anwendungsfälle kann es von Vorteil sein, wenn die Anlage zum Gießen unter Druck eine Kippgießanlage ist.

Für manche Anwendungsfälle kann es von Vorteil sein, wenn die Anlage zum Gießen unter Druck eine Kopfgießanlage ist.

Für bestimmte Anwendungsfälle kann es von Vorteil sein, wenn die Anlage zum Gießen unter Druck eine Bodengießanlage ist.

Für viele Anwendungsfälle kann es von Vorteil sein, wenn die Anlage zum Gießen unter Druck eine Seitengießanlage ist.

Es kann zweckmäßig sein, wenn die Gießformhälfte um eine horizontal verlaufende Schwenkachse, welche auf derjenigen Seite der Gießvorrichtung verläuft, von der aus die Innenfläche der Gießformhälfte, vorzugsweise durch eine Person, behandelt werden soll, schwenkbar ist.

Als besonders vorteilhaft kann es sein, wenn die Gießformhälfte um bis zu 135°, vorzugsweise um bis zu 90°; besonders bevorzugt um bis zu 85°, aus der horizontalen Position schwenkbar ist.

Vorzugsweise kann die obere Gießformhälfte nach unten schwenkbar sein. Vorzugsweise kann die untere Gießformhälfte nach oben schwenkbar sein.

Für die Druckversorgung der unteren Kammer bzw. des unteren Druckraums bzw. Ofeninnenraums und gegebenenfalls (beispielsweise im Falle einer Gegendruck-Kokillengießanlage) für die Druckversorgung der oberen Kammer bzw. des oberen Druckraums über entsprechende Druckleitungen kann es von Vorteil sein, wenn jeweils zwei parallel geschaltete Ventile vorgesehen sind, nämlich ein großes Ventil zur Hauptfüllung des Druckraums mit Druckmedium und ein kleines Ventil zur präziseren Druckeinstellung innerhalb der Druckraums.

Zweckmäßigerweise kann jeweils eine Vorsteuerung zur Regelung jedes Ventils vorgesehen sein, welche als Kennfeld oder als mathematisches Modell realisierbar ist.

Zur Füllung der Druckräume wird vorteilhaft zuerst das kleine Ventil auf etwa 40 bis 60 %, vorzugsweise auf etwa 45 bis 55%, besonders bevorzugt auf etwa 50% geöffnet, dann wird das große Ventil mit dem Stellwert aus der Vorsteuerung, korrigiert um den voreingestellten Durchfluss des kleinen Ventils, beaufschlagt, und schließlich wird mit dem kleinen Ventil der Druck präzise geregelt.

Durch eine derart ausgebildete Druckversorgung kann eine höhere Produktivität erreicht und die Regelungsqualität deutlich verbessert werden.

Es kann weiterhin vorteilhaft sein, wenn zwei Gießvorrichtungen, insbesondere zwei Säulengießvorrichtungen bzw. -maschinen, vorgesehen sind, welche mit Abstand nebeneinander angeordnet sind, wobei zwischen den Gießvorrichtungen ein Manipulator zur Handhabung von Werkstücken oder Werkzeugen beider Gießvorrichtungen angeordnet ist. Geeignete Manipulatoren sind dem Fachmann bekannt. Die erfindungsgemäße Anordnung führt zu einem erhöhten Automatisierungsgrad und zu einer messbaren Produktivitätssteigerung.

Zweckmäßigerweise kann der Schlitten so ausgebildet sein, dass mehrere, vorzugsweise zwei nebeneinander angeordnete Ofenpositionierstellen zur vollautomatischen Aufnahme bzw. Entnahme und vollautomatischen Abgabe bzw. Überführung der Öfen vorgesehen sind. Anstelle eines Schlittens mit mehreren Ofenpositionierstellen können auch mehrere Schlitten mit jeweils einer Ofenpositionierstelle aneinandergekoppelt sein. Eine Kombination aus wenigstens einem Schlitten mit mehreren Ofenpositionierstellen und wenigstens einem Schlitten mit einer Ofenpositionierstelle ist auch möglich. Erreicht werden soll Folgendes: Bei Vorhandensein von mehreren, vorzugsweise von zwei Ofenpositionierstellen im Schlitten besteht die Möglichkeit, zeitsparend auf dem Weg zwischen einer Bereitstellungsposition und der Gießvorrichtung einen mit Schmelze versehenen Ofen in einer Ofenpositionierstelle des Schlittens mitzunehmen, aus der Gießvorrichtung einen anderen, insbesondere leeren Ofen in eine zweite, noch freie Ofenpositionierstelle des Schlittens aufzunehmen, anschließend den mit Schmelze versehenen Ofen aus der ersten Ofenpositionierstelle in die ofenlose Gießvorrichtung zu überführen, um schließlich den bereits aufgenommenen anderen, insbesondere leeren Ofen zeitsparend auf dem Weg zwischen Gießvorrichtung und Bereitstellungsposition mitzunehmen, damit dieser in eine freie Stelle der Bereitstellungsposition zur weiteren Verwendung, insbesondere zur Neubeschickung mit Schmelze überführt werden kann. Diese Ausgestaltung führt dazu, dass Umrüstzeiten noch weiter verkürzt werden können.

Vorteilhaft kann der Schlitten so ausgebildet sein, dass mehrere, vorzugsweise zwei nebeneinander angeordnete Formpositionierstellen zur vollautomatischen Aufnahme bzw. Entnahme und vollautomatischen Abgabe bzw. Überführung der Gießformen oder Gießformhälften vorgesehen sind. Anstelle eines Schlittens mit mehreren Formpositionierstellen können auch mehrere Schlitten mit jeweils einer Formpositionierstelle aneinandergekoppelt sein. Eine Kombination aus wenigstens einem Schlitten mit mehreren Formpositionierstellen und wenigstens einem Schlitten mit einer Formpositionierstelle ist auch möglich. Erreicht werden soll Folgendes: Bei Vorhandensein von mehreren, vorzugsweise von zwei Formpositionierstellen im Schlitten besteht die Möglichkeit, zeitsparend auf dem Weg zwischen einer Bereitstellungsposition und der Gießvorrichtung eine neue Gießform oder Gießformhälfte in einer Ofenpositionierstelle des Schlittens mitzunehmen, aus der Gießvorrichtung dann eine ausgediente Gießform oder Gießformhälfte in eine zweite, noch freie Formpositionierstelle des Schlittens aufzunehmen, anschließend die neue Gießform oder Gießformhälfte aus der ersten Formpositionierstelle in die ohne Gießform oder Gießformhälfte versehene Gießvorrichtung zu überführen, um schließlich die bereits aufgenommene ausgediente Gießform oder Gießformhälfte zeitsparend auf dem Weg zwischen Gießvorrichtung und Bereitstellungsposition mitzunehmen, damit diese in eine freie Stelle der Bereitstellungsposition zur weiteren Verwendung überführt werden kann. Diese Ausgestaltung führt dazu, dass Umrüstzeiten noch weiter verkürzt werden können.

Vorteilhaft kann die Ebene in horizontaler und/oder in vertikaler Richtung verfahrbar sein.

Es kann vorteilhaft sein, wenn eine Zwischenplatte bzw. eine Formaufspannplatte der Gießvorrichtung vorgegebene Temperierkanäle, vorzugsweise Kühlkanäle, aufweist, wobei diese in, auf der Zwischenplatte bzw. der Aufspannplatte, vorzugsweise im Randbereich, angeordnete Anschlüsse für außerhalb der Gießvorrichtung angeordnete Temperierleitungen, insbesondere für Kühlleitungen, enden. Damit behindern die Temperierleitungen nicht das Umrüsten der Gießform oder des Ofens.

Zudem kann so gegenüber dem Stand der Technik auf eine zusätzliche Kühlplatte bzw. einen so genannten Kühlstein, welche gemäß Stand der Technik zwischen Zwischenplatte bzw. Formaufspannplatte und der unteren Gießformhälfte bzw. Gießform angeordnet war, verzichtet werden. Die zusätzliche Kühlplatte hatte gemäß Stand der Technik den Zweck, kühlende Medien, insbesondere Kühlwasser oder Kühlluft, von außen in die obere Kammer und entsprechend zur Gießform zu führen. Durch Verlegung der Temperierkanäle, vorzugsweise Kühlkanäle, in die Zwischenplatte bzw. Formaufspannplatte, auf der die Gießform oder die untere Gießformhälfte direkt montiert ist, kann die Temperierung der Gießform besser gesteuert werden. Gleichzeitig kann durch Wegfall der zusätzlichen Kühlplatte das Kammervolumen besser ausgenutzt werden und die Betriebssicherheit der Gießvorrichtung verbessert werden, da weniger Dichtstellen anfallen. Die Dichtheit des Kühlsystems wird so optimiert.

Eine weitere Produktivitätssteigerung wird durch eine Erhöhung der Lebensdauer der mit Temperierkanälen versehenen Zwischenplatte bzw. Formaufspannplatte erreicht, indem die Innenflächen der Temperierkanäle vernickelt sein können. Dies führt insbesondere zu einem erhöhten Korrosionsschutz.

Es kann zweckmäßig sein, wenn jede Temperierleitung, insbesondere Kühlleitung, individuell steuerbar, insbesondere zeitsteuerbar, ist.

Vorteilhaft wird die erfindungsgemäße Anlage zur Herstellung von Bauteilen aus dem Anwendungsbereich Fahrwerksguss, namentlich von radführenden Bauteilen, insbesondere Lenkern, Längslenkern, Querlenkern, Gussecken, Gussknoten, Rahmen usw., von radtragenden Bauteilen, insbesondere Schwenklagern, Radträgern, Achsschenkeln, von Einspritzpumpengehäusen oder dergleichen, verwendet.

Es kann vorteilhaft sein, die erfindungsgemäße Anlage zur Herstellung von hoch belasteten Sicherheitsbauteilen, vorzugsweise von Felgen, von Motorkomponenten, insbesondere von Motorblöcken, Saugkrümmern oder Kurbelgehäusen, von druckdichten Bauteilen, von Einspritzpumpengehäusen oder dergleichen zu verwenden.

Es kann vorteilhaft sein, wenn die erfindungsgemäße Anlage als Niederdruck-Kokillengießanlage zur Herstellung von Bauteilen aus dem Anwendungsbereich Fahrwerksguss, namentlich von radtragenden Bauteilen, insbesondere Schwenklagern, Radträgern, Achsschenkeln, von Einspritzpumpengehäusen oder dergleichen, verwendet wird.

Es kann auch zweckmäßig sein, die erfindungsgemäße Anlage als Niederdruck-Kokillengießanlage zur Herstellung von Fahrwerksteilen, vorzugsweise von radführenden Bauteilen, insbesondere Lenkern, Längslenkern, Querlenkern, Gussecken, Gussknoten, Rahmen oder dergleichen, oder von hoch belasteten Sicherheitsbauteilen, vorzugsweise von Felgen, von Motorkomponenten, insbesondere von Motorblöcken, Saugkrümmern oder Kurbelgehäusen, von druckdichten Bauteilen, von Einspritzpumpengehäusen oder dergleichen zu verwenden.

Es kann vorteilhaft, wenn die erfindungsgemäße Anlage zur Herstellung von Fahrwerksteilen oder Sicherheitsbauteilen aus Leichtmetall bzw. einer Leichtmetalllegierung, besonders bevorzugt aus Aluminium bzw. einer Aluminiumlegierung, verwendet wird.

Weitere Einzelheiten der Erfindung ergeben sich aus der nachfolgenden Beschreibung in Verbindung mit der Zeichnung. In dieser zeigen:
- Fig. 1: schematisch in Seitenansicht eine erfindungsgemäße Gießvorrichtung,
- Fig. 2: schematisch in Draufsicht eine erfindungsgemäße Anlage mit und
- Fig. 3: schematische in Draufsicht eine zweite erfindungsgemäße Anlage.

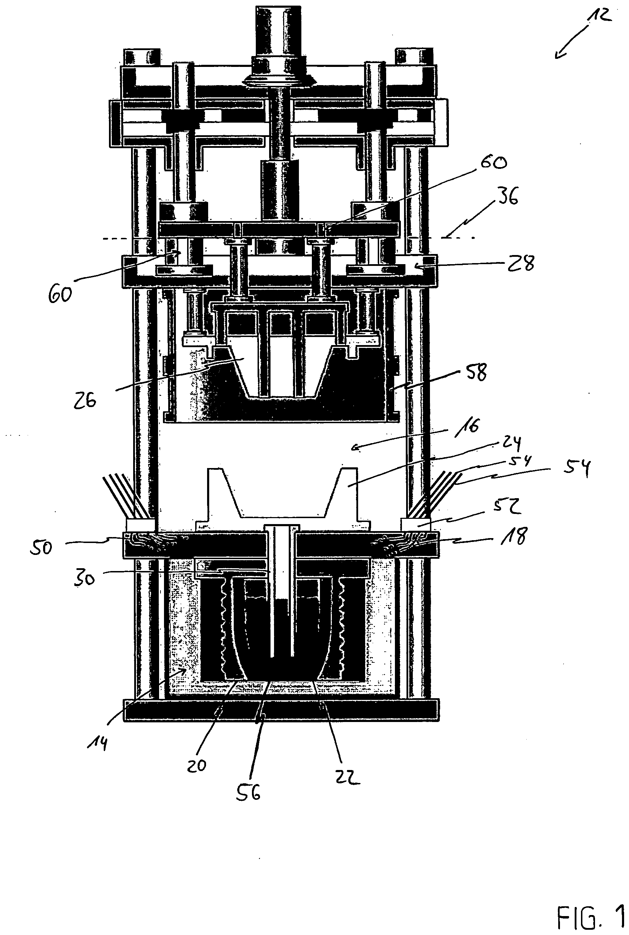

Werden in den Fig. 1 bis 3 gleiche Bezugsziffern verwendet, so bezeichnen diese gleiche Teile bzw. Bereiche.

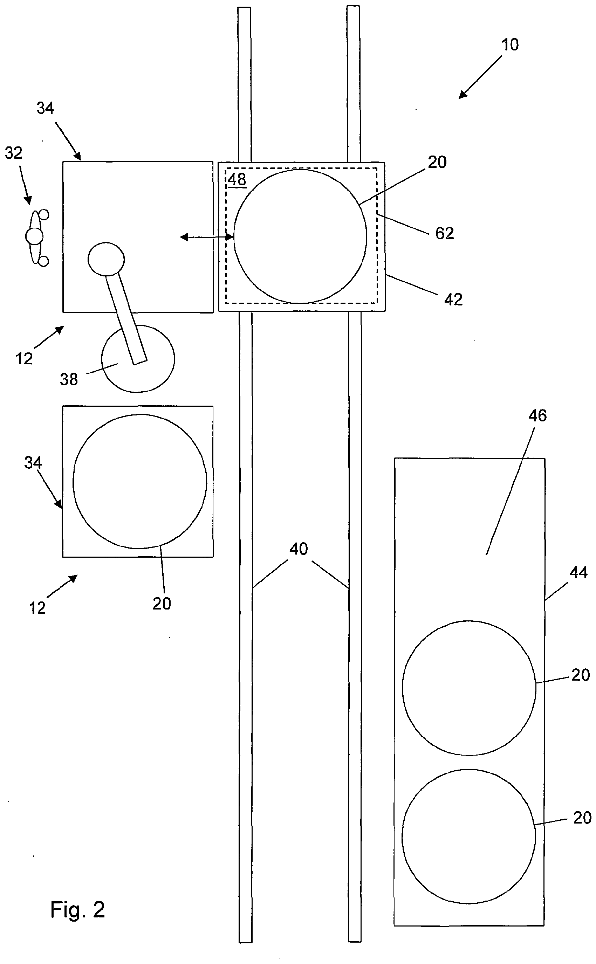

Die in Fig. 2 schematisch dargestellte Gegendruck-Kokillengießanlage 10 umfasst zwei mit Abstand nebeneinander angeordnete Gießvorrichtungen 12. Eine solche Gießvorrichtung ist schematisch in Fig. 1 dargestellt.

Die Gießvorrichtung 12 weist eine untere hermetisch abdichtbare Kammer 14 und eine obere hermetisch abdichtbare Kammer 16 auf, welche durch eine Zwischenplatte bzw. Formaufspannplatte 18 voneinander getrennt sind.

In der unteren Kammer 14 ist ein Ofen 20 vorgesehen, der einen Tiegel 56 mit Schmelze 22 aufweist.

In der oberen Kammer 16 ist eine in etwa horizontal geteilte Gießform angeordnet, wobei diese aus einer unteren Gießformhälfte 24, welche auf der Zwischenplatte bzw. der Formaufspannplatte 18 angeordnet ist, und einer oberen Gießformhälfte 26, welche unter einer oberen, vertikal bewegbaren Tragkonstruktion 28, beispielsweise einer weiteren Platte, angeordnet ist, besteht. Diese Tragkonstruktion 28 weist zudem eine Art Haube 58 auf, welche beim vertikalen Verfahren der Tragkonstruktion 28 nach unten auf die Zwischenplatte bzw. die Formaufspannplatte 18 zur Ausbildung der hermetisch abgedichteten oberen Kammer 16 aufsetzt.

Fig. 1 zeigt eine Gießvorrichtung 12 in einem Zustand, in dem die Gießform geöffnet und somit die Haube 58 von der Zwischenplatte bzw. der Formaufspannplatte 18 abgehoben ist.

Der mit Schmelze 22 versehene Ofen 20 bzw. Tiegel 56 und der durch die beiden Gießformhälften 24, 26 im geschlossenen Zustand ausgebildete Gießformhohlraum sind über ein, an der Zwischenplatte bzw. der Formaufspannplatte 18 montiertes Steigrohr 30 miteinander verbunden.

Die obere Gießformhälfte 26 ist nun erfindungsgemäß aus der horizontalen Position um beispielsweise etwa 85° nach unten in eine etwa vertikale Position schwenkbar, wobei die Innenfläche der Gießformhälfte 26 zu einer die Fig. 1 betrachtenden Person 32 zeigen würde. Eine Person 32, die dann vor der Gießvorrichtung 12, vorzugsweise in etwa der Höhe der Zwischenplatte bzw. der Formaufspannplatte 18 steht, kann dann besonders einfach die Gießformhälfte 26 behandeln, insbesondere reinigen, schlichten und/oder korrigieren.

In Fig. 1 sind rein schematisch Lager 60 und eine Schwenkachse 36 dargestellt, welche die Verschwenkbarkeit der oberen Gießformhälfte 26 verdeutlichen sollen. Vorzugsweise sind zum Verschwenken der oberen Gießformhälfte 26 geeignete hier nicht dargestellte Kraftzylinder vorgesehen.

Zwischen den in Fig. 2 mit Abstand nebeneinander angeordneten zwei Gießvorrichtungen 12 ist erfindungsgemäß ein Manipulator 38 zur Handhabung von Werkstücken oder Werkzeugen bzw. Gießformen oder Gießformhälften beider Gießvorrichtungen 12 angeordnet.

Auf der hinteren Seite der beiden Gießvorrichtungen 12 ist ein Schienensystem 40 vorgesehen, auf dem ein Schlitten 42 zur vollautomatischen Aufnahme bzw. Entnahme und vollautomatischen Abgabe bzw. Überführung eines Ofens 20 angeordnet ist.

Der Schlitten 42 pendelt hierbei zwischen den Gießvorrichtungen 12 und einer entfernt davon liegenden Bereitstellungsposition 44.

In den Fig. 2 ist dargestellt, wie der Schlitten 42 vor einer Gießvorrichtung 12 hält, um einen mit Schmelze befüllten Ofen 20 aus seiner Ofenpositionierstelle 62 in die, noch nicht mit einem Ofen 20 versehene Gießvorrichtung 12 zu überführen, wobei hierzu die Ebene 48 in diese Gießvorrichtung verfahren wird. Zuvor hat der Schlitten 42 diesen Ofen unter Hinterlassen einer freien Stelle 46 an der Bereitstellungsposition 44 aufgenommen.

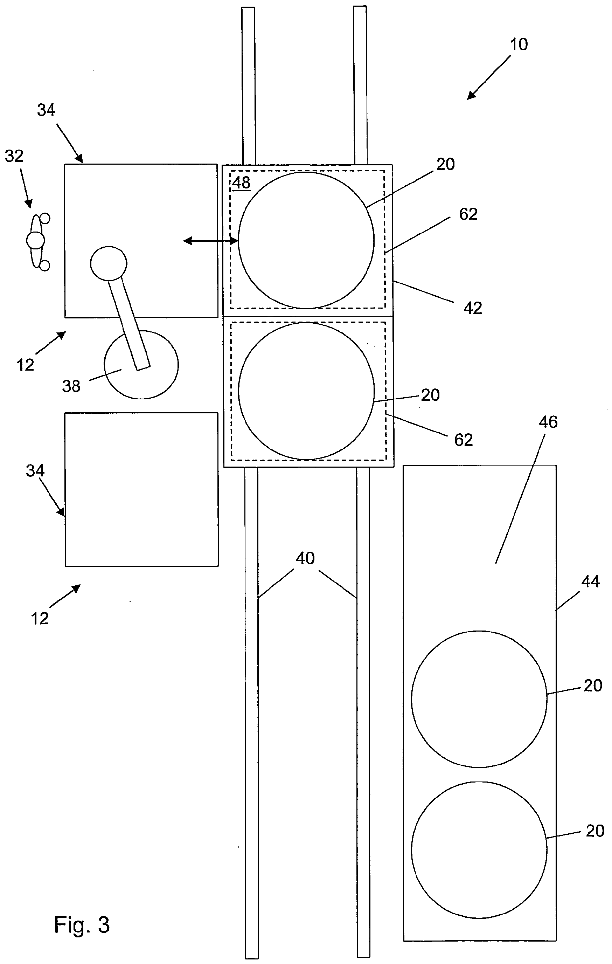

In Fig. 3 weist der Schlitten gegenüber dem in Fig. 1 dargestellten eine weitere Ofenpositionierstelle 62 auf. Dadurch ist ein zeitsparender Wechsel eines leeren in der Gießvorrichtung angeordneten Ofens gegen ein mit Schmelze gefüllten Ofen möglich. Der Schlitten 42 nimmt zunächst den mit Schmelze gefüllten Ofen in einer ersten Ofenpositionierstelle 62 aus der Bereitstellungsposition 44 auf, fährt anschließend zur Gießvorrichtung 12, um dort den leeren Ofen in eine zweite, noch freie Ofenpositionierstelle 62 aufzunehmen, überführt anschließend den mit Schmelze versehenen Ofen aus der ersten Ofenpositionierstelle 62 in die ofenlose Gießvorrichtung 12, um schließlich den bereits aufgenommenen leeren Ofen zur Bereitstellungsposition 44 mitzunehmen, damit dieser in eine freie Stelle 46 der Bereitstellungsposition 44 zur Neubeschickung mit Schmelze überführt werden kann.

Nicht nur eine Erleichterung für die Umrüstung der Gießvorrichtung 12 stellen auch die auf der Zwischenplatte bzw. der Formaufspannplatte 18 vorzugsweise im Randbereich angeordneten Anschlüsse 52 dar, die auf der einen Seite mit den in der Zwischenplatte bzw. der Formaufspannplatte 18 vorgesehenen Temperierkanälen 52 und auf den anderen Seite mit den außerhalb der Gießvorrichtung 12 angeordnete Temperierleitungen 54, insbesondere Kühlleitungen, verbunden sind, wobei dem Austausch der Gießform bzw. der Gießformhälften 24, 26 diese Temperierleitungen nicht im Wege stehen.

Vielmehr kann durch die in der Zwischenplatte bzw. der Formaufspannplatte 18 angeordneten Temperierkanäle 50 auf eine gemäß dem Stand der Technik erforderliche zusätzliche Kühlplatte bzw. einen so genannten Kühlstein, welche gemäß Stand der Technik zwischen Zwischenplatte bzw. Formaufspannplatte 18 und der unteren Gießformhälfte bzw. Gießform 24 angeordnet war, verzichtet werden. Durch Verlegung der Temperierkanäle 50, vorzugsweise Kühlkanäle, in die Zwischenplatte bzw. Formaufspannplatte 18, auf der die Gießform oder die untere Gießformhälfte 24 direkt montierbar ist, kann die Temperierung der Gießform 24 wesentlich besser gesteuert werden. Gleichzeitig kann durch Wegfall der zusätzlichen Kühlplatte das obere Kammervolumen besser ausgenutzt werden und die Betriebssicherheit der Gießvorrichtung 12 verbessert werden, da weniger Dichtstellen anfallen. Die Dichtheit des Kühlsystems wird insgesamt optimiert.

### Bezugszeichenliste

### (ist Teil der Beschreibung)

- 10: Anlage
- 12: Gießvorrichtung
- 14: Kammer
- 16: Kammer
- 18: Zwischenplatte bzw. Formaufspannplatte
- 20: Ofen
- 22: Schmelze
- 24: untere Gießformhälfte
- 26: obere Gießformhälfte
- 28: Tragkonstruktion
- 30: Steigrohr
- 32: Person
- 34: Seite
- 36: Schwenkachse
- 38: Manipulator
- 40: Schienensystem
- 42: Schlitten
- 44: Bereitstellungsposition
- 46: freie Stelle
- 48: untere Ebene
- 50: Temperierkanäle
- 52: Anschlussstelle
- 54: Temperierleitungen
- 56: Tiegel
- 58: Haube
- 60: Lager
- 62: Ofenpositionierstelle

## Patentansprüche

1. Anlage (10) zum Gießen unter Druck mit einer Dauergießform aus wenigstens zwei Gießformteilen, insbesondere aus zwei Gießformhälften, wobei wenigstens ein Gießformteil nach dem Öffnen der Dauergießform in eine Position schwenkbar ist, in welcher die Innenfläche dieses Gießformteils, vorzugsweise durch eine Person (32), arbeitserleichternd und zeitsparend behandelbar ist, **dadurch gekennzeichnet,**
**dass** ein im Boden versenktes oder auf dem Boden positioniertes Schienensystem (40) vorgesehen ist,
auf dem wenigstens ein Schlitten (42) zur vollautomatischen Aufnahme bzw. Entnahme und vollautomatischen Abgabe bzw. Überführung eines Ofens (20) angeordnet ist, wobei der Schlitten (42) zwischen einer Gießvorrichtung (12) der Gegendruck- oder Niederdruck-Kokillengießanlage und einer entfernt davon liegenden Bereitstellungsposition (44) pendelt, derart, dass der Schlitten (42) einen Ofen (20) an der Bereitstellungsposition (44) aufnimmt und diesen in die, noch nicht mit einem Ofen (20) versehene Gießvorrichtung (12) überführt, oder dass der Schlitten (42) einen Ofen (20) aus der Gießvorrichtung (12) entnimmt und diesen an eine freie Stelle (46) der Bereitstellungsposition (44), insbesondere zur Neubeschickung mit Schmelze, abgibt,
und
der Schlitten (42) zudem zur vollautomatischen Aufnahme bzw. Entnahme und vollautomatischen Abgabe bzw. Überführung einer Gießform oder Gießformhälfte vorgesehen ist, wobei der Schlitten (42) zwischen der Gießvorrichtung (12) und einer entfernt davon liegenden Bereitstellungsposition pendelt, derart, dass der Schlitten (42) eine Gießform oder Gießformhälfte an der Bereitstellungsposition aufnimmt und diese in die, noch nicht mit einer Gießform oder Gießformhälfte versehene Gießvorrichtung (12) überführt, oder dass der Schlitten (42) eine Gießform oder Gießformhälfte aus der Gießvorrichtung (12) entnimmt und diese an eine freie Stelle der Bereitstellungsposition zur weiteren Verwendung, insbesondere zur Zwischenlagerung oder zum Austausch, abgibt,
wobei der Schlitten (42) wenigstens zwei Ebenen aufweist, wobei eine untere Ebene (48) zur vollautomatischen Aufnahme bzw. Entnahme und vollautomatischen Abgabe bzw. Überführung des Ofens (20), und eine obere Ebene zur vollautomatischen Aufnahme bzw. Entnahme und vollautomatischen Abgabe bzw. Überführung der Gießform oder Gießformhälfte vorgesehen ist.

2. Anlage (10) nach Anspruch 1, **dadurch gekennzeichnet, dass** dieselbe eine Säulengießanlage ist.

3. Anlage (10) nach Anspruch 1, **dadurch gekennzeichnet, dass** dieselbe eine Gegendruck-Kokillengießanlage oder Niederdruck-Kokillengießanlage ist.

4. Anlage (10) nach Anspruch 1, **dadurch gekennzeichnet, dass** dieselbe eine Schwerkraft-Kokillengießanlage ist.

5. Anlage (10) nach Anspruch 1, **dadurch gekennzeichnet, dass** dieselbe eine Kippgießanlage ist.

6. Anlage (10) nach Anspruch 1, **dadurch gekennzeichnet, dass** der Schlitten (42) so ausgebildet ist, dass dieser mehrere, vorzugsweise zwei nebeneinander angeordnete Ofenpositionierstellen (62) zur vollautomatischen Aufnahme bzw. Entnahme und vollautomatischen Abgabe bzw. Überführung der Öfen (20) aufweist.

7. Anlage (10) nach Anspruch 1, **dadurch gekennzeichnet, dass** der Schlitten (42) so ausgebildet ist, dass dieser mehrere, vorzugsweise zwei nebeneinander angeordnete Formpositionierstellen zur vollautomatischen Aufnahme bzw. Entnahme und vollautomatischen Abgabe bzw. Überführung der Gießformen oder Gießformhälften aufweist.

8. Anlage (10) nach Anspruch 1, **dadurch gekennzeichnet, dass** die untere und/oder obere Ebene (48) in horizontaler und/oder in vertikaler Richtung verfahrbar ist.

## Claims

1. Installation (10) for casting under pressure with a permanent casting mould consisting of at least two casting mould parts, in particular of two casting mould halves, wherein at least one casting mould part can be pivoted, after opening the permanent casting mould, into a position in which the inner surface of this casting mould part can be handled, preferably by one person (32), in a work-facilitating and time-saving manner, **characterized in that** a rail system (40) sunk in the floor or positioned on the floor is provided on which there is arranged at least one carriage (42) for fully automatically receiving or removing and fully automatically delivering or transferring a furnace (20), wherein the carriage (42) swings between a casting device (12) of the counter-pressure or low-pressure die casting installation and a standby position (44) situated remotely therefrom in such a way that the carriage (42) receives a furnace (20) at the standby position (44) and transfers it into the casting device (12) not yet provided with a furnace (20), or that the carriage (42) removes a furnace (20) from the casting device (12) and delivers it to a free point (46) of the standby position (44), in particular for reloading with melt, and the carriage (42) is additionally provided for fully automatically receiving or removing and fully automatically delivering or transferring a casting mould or casting mould half, wherein the carriage (42) swings between the casting device (12) and a standby position situated remotely therefrom in such a way that the carriage (42) receives a casting mould or casting mould half at the standby position and transfers it into the casting device (12) not yet provided with a casting mould or casting mould half, or that the carriage (42) receives a casting mould or casting mould half from the casting device (12) and delivers it to a free point of the standby position for further use, in particular for intermediate storage or for exchange, wherein the carriage (42) has at least two planes, wherein a lower plane (48) is provided for fully automatically receiving or removing and fully automatically delivering or transferring the furnace (20), and an upper plane is provided for fully automatically receiving or removing and fully automatically delivering or transferring the casting mould or casting mould half.

2. Installation (10) according to Claim 1, **characterized in that** the latter is a column casting installation.

3. Installation (10) according to Claim 1, **characterized in that** the latter is a counter-pressure die casting installation or low-pressure die casting installation.

4. Installation (10) according to Claim 1, **characterized in that** the latter is a gravity die casting installation.

5. Installation (10) according to Claim 1, **characterized in that** the latter is a tilt casting installation.

6. Installation (10) according to Claim 1, **characterized in that** the carriage (42) is designed in such a way that it has a plurality of, preferably two, furnace-positioning points (62) arranged next to one another for fully automatically receiving or removing and fully automatically delivering or transferring the furnaces (20).

7. Installation (10) according to Claim 1, **characterized in that** the carriage (42) is designed in such a way that it has a plurality of, preferably two, mould-positioning points arranged next to one another for fully automatically receiving or removing and fully automatically delivering or transferring the casting moulds or casting mould halves.

8. Installation (10) according to Claim 1, **characterized in that** the lower and/or upper plane (48) are or is movable in the horizontal and/or in the vertical direction.

## Revendications

1. Système (10) pour la coulée sous pression avec un moule de coulée permanent constitué d'au moins deux parties de moule de coulée, plus particulièrement de deux moitiés de moule de coulée, au moins une partie du moule de coulée pouvant pivoter, après l'ouverture du moule de coulée permanent, dans une position dans laquelle la surface intérieure de cette partie de moule de coulée peut être manipulée, de préférence par une personne (32), de manière à faciliter le travail et en économisant du temps, **caractérisé en ce que**
un système de rails (40) encastré dans le sol ou positionné sur le sol est prévu,
sur lequel est disposé au moins un chariot (42) pour la réception ou le retrait entièrement automatique et la dépose ou le transfert entièrement automatique d'un four (20), le chariot (42) faisant la navette entre un dispositif de coulée (12) du système de coulée en coquille à contre-pression ou à basse pression et une position de mise à disposition (44) éloignée de celle-ci, de façon à ce que le chariot (42) reçoive un four (20) au niveau de la position de mise à disposition (44) et transfère celui-ci dans le dispositif de coulée (12) non encore muni d'un four (20) ou de façon à ce que le chariot (42) retire un four (20) du dispositif de coulée (12) et dépose celui-ci à un endroit libre (46) de la position de mise à disposition (44), plus particulièrement pour une nouvelle alimentation en masse en fusion,
et
le chariot (42) étant prévu en outre pour la réception ou le retrait entièrement automatique et la dépose ou le transfert entièrement automatique d'un moule de coulée ou d'une moitié de moule de coulée, le chariot (42) faisant la navette entre le dispositif de coulée (12) et une position de mise à disposition éloignée de celui-ci, de façon à ce que le chariot (42) reçoive un moule de coulée ou une moitié de moule de coulée au niveau de la position de mise à disposition et transfère celui-ci dans le dispositif de coulée (12) non encore muni d'un moule de coulée ou d'une moitié de moule de coulée ou de façon à ce que le chariot (42) retire un moule de coulée ou une moitié de moule de coulée du dispositif de coulée (12) et dépose celui-ci à un endroit libre de la position de mise à disposition pour une utilisation ultérieure, plus particulièrement pour un entreposage ou pour un échange,
le chariot (42) comprenant au moins deux niveaux, un niveau inférieur (48) étant prévu pour la réception ou le retrait entièrement automatique et la dépose ou le transfert entièrement automatique du four (20) et un niveau supérieur étant prévu pour la prise en charge ou le retrait entièrement automatique et la dépose ou le transfert entièrement automatique du moule de coulée ou de la moitié du moule de coulée.

2. Système (10) selon la revendication 1, **caractérisé en ce que** celle-ci est un système de coulée à colonnes.

3. Système (10) selon la revendication 1, **caractérisé en ce que** celui-ci est un système de coulée en coquille à contre-pression ou un système de coulée en coquille à basse pression.

4. Système (10) selon la revendication 1, **caractérisé en ce que** celui-ci est un système de coulée en coquille par gravité.

5. Système (10) selon la revendication 1, **caractérisé en ce que** celui-ci est un système de coulée en coquille par basculement.

6. Système (10) selon la revendication 1, **caractérisé en ce que** le chariot (42) est conçu de façon à comprendre plusieurs, de préférence deux, points de positionnement de four (62) juxtaposés pour la réception ou le retrait entièrement automatique et la dépose ou le transfert entièrement automatique des fours (20).

7. Système (10) selon la revendication 1, **caractérisé en ce que** le chariot (42) est conçu de façon à comprendre plusieurs, de préférence deux, points de positionnement de moule juxtaposés pour la prise en charge ou le retrait entièrement automatique et la dépose ou le transfert entièrement automatique des moules de coulée ou des moitiés de moules.

8. Système (10) selon la revendication 1, **caractérisé en ce que** le niveau inférieur et/ou le niveau supérieur (48) est mobile dans la direction horizontale et/ou verticale.
